# FASCICULE DE BREVET EUROPEEN

(11) **EP 1 450 109 B1**
(45) Date de publication et mention de la délivrance du brevet: **17.05.2006**
(21) Numéro de dépôt: 04354006.1
(22) Date de dépôt: 24.02.2004
(51) Int. Cl.: F24D 11/00, F24D 19/10

(54) **Installation solaire combinée comportant des moyens de gestion des surchauffes et procédé de contrôle de l'installation**
Kombinierte Solarheizungsanlage mit Überhitzungsverwaltung und Verfahren zur Regulierung der Anlage.
Mixed solar installation with overheat control and method for regulating the installation.

(30) Priorité: 24.02.2003 FR 0302226
(43) Date de publication de la demande: 25.08.2004
(73) Titulaire: Clipsol, 73100 Aix-Les-Bains (FR)
(72) Inventeur: Papillon, Philippe, 73000 Chambéry (FR); Jean, André, 73100 Trèvignin (FR)
(74) Mandataire: Jouvray, Marie-Andrée

(56) Documents cités:
- US-A- 4 399 807
- US-A1- 2002 112 435
- US-B1- 6 357 512

## Description

### Domaine technique de l'invention

L'invention concerne une installation solaire combinée comportant au moins un capteur solaire, un récipient de stockage d'un fluide de stockage d'énergie, un circuit de circulation d'un fluide dans les capteurs solaires, muni d'un premier circulateur et destiné à permettre le chauffage du fluide de stockage par les capteurs solaires, et des moyens de contrôle de la circulation de fluide dans les capteurs solaires.

### État de la technique

Dans les installations solaires et plus particulièrement dans les installations solaires combinées de chauffage et de production d'eau chaude sanitaire, la quantité d'énergie solaire est, en période estivale, très largement supérieure aux besoins, qui se limitent alors à la production d'eau chaude sanitaire.

La réglementation imposant une limitation à 110°C de la température du fluide de stockage contenu dans un récipient de stockage, certaines installations comportent une boucle de décharge. Une telle boucle de décharge, commandée manuellement par l'utilisateur lorsque la température extérieure est supérieure à un seuil prédéterminé, permet d'évacuer l'excédent d'énergie dans un mini-plancher chauffant connecté en parallèle sur les organes de chauffage, plancher chauffant et/ou radiateurs, de l'installation et disposé dans le sol, à l'intérieur ou à l'extérieur de la maison à chauffer.

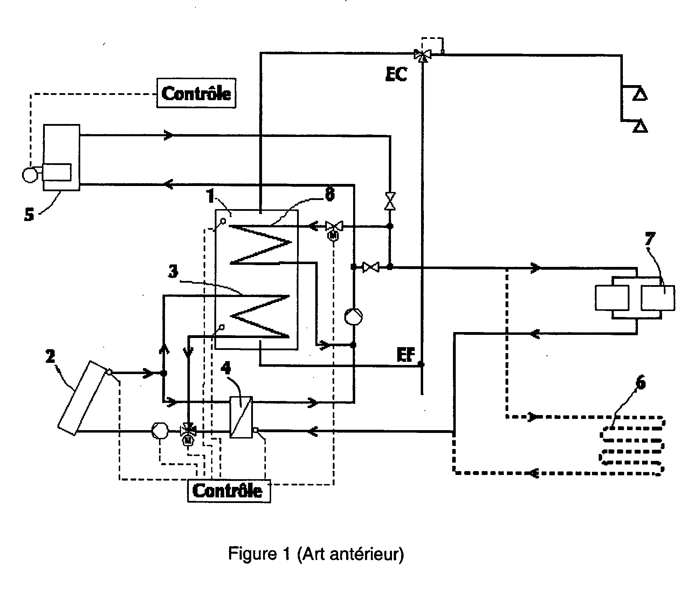

Actuellement, les installations combinées de chauffage et de production d'eau chaude sanitaire comportent au moins deux circuits indépendants de circulation de fluides. Comme représenté à la figure 1, la plupart des installations connues, comportent trois circuits indépendants de circulation de fluide :
- un premier fluide, constitué par de l'eau sanitaire, circule dans un récipient de stockage 1, entre une entrée d'eau froide EF et une sortie d'eau chaude EC,
- un second fluide, comportant de l'antigel, circule dans au moins un capteur solaire 2, dans un premier échangeur de chaleur 3 disposé dans le récipient de stockage 1 contenant de l'eau sanitaire et, éventuellement, dans le primaire d'un second échangeur de chaleur 4,
- un troisième fluide, ou fluide de chauffage, circule entre une chaudière, constituant un chauffage auxiliaire 5, et un plancher chauffant 6 et/ou des radiateurs de chauffage 7. Le troisième fluide peut également circuler dans le secondaire du second échangeur de chaleur 4 et dans un troisième échangeur de chaleur 8 disposé dans le récipient de stockage 1 contenant de l'eau sanitaire.

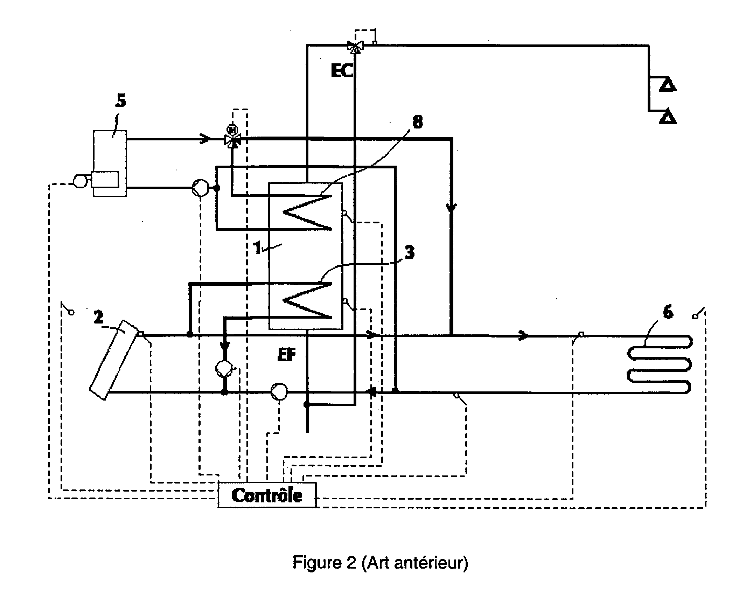

Il a également été proposé d'intégrer le chauffage solaire et le chauffage auxiliaire et de réduire à deux le nombre de circuits indépendants de circulation de fluides, le récipient de stockage 1 contenant toujours de l'eau sanitaire. Dans ce type d'installation, représentée à la figure 2, le même fluide, contenant de l'antigel, peut circuler dans les capteurs solaires 2, dans le chauffage auxiliaire 5, dans le plancher chauffant 6 et/ou les radiateurs de chauffage et dans deux échangeurs de chaleur 3 et 8 disposés dans le récipient de stockage.

Or, l'utilisation d'eau sanitaire comme fluide de stockage présente des risques. Cela peut notamment faciliter la propagation de certaines maladies, comme la légionellose.

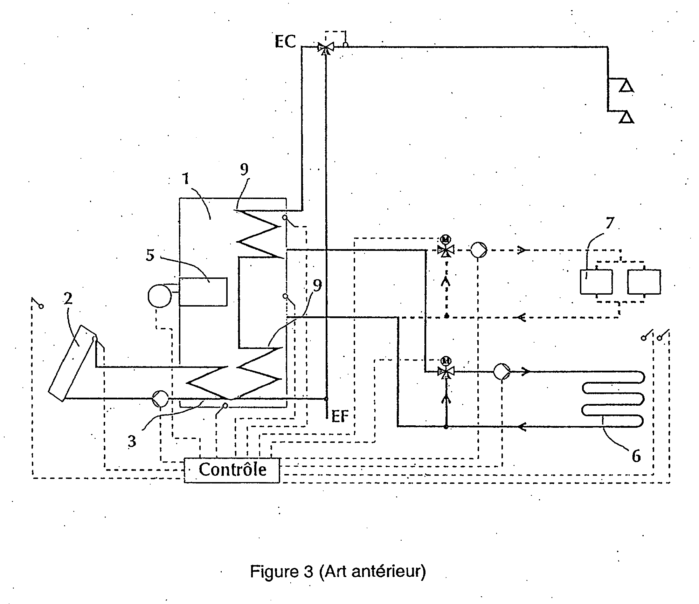

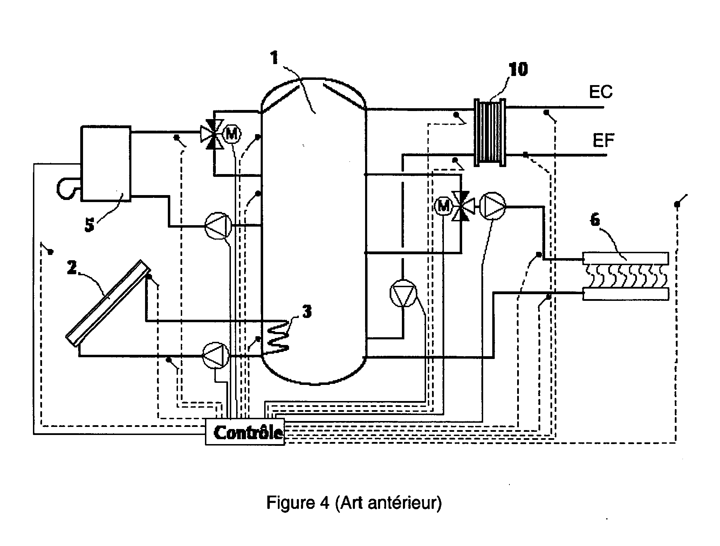

Pour écarter ces risques, dans certaines installations connues comportant trois circuits indépendants de circulation de fluide, le récipient de stockage 1, généralement de grande dimension (1000 à 15001), contient le fluide de chauffage circulant dans le chauffage auxiliaire 5, le plancher chauffant 6 et/ou les radiateurs de chauffage 7. Le chauffage auxiliaire 5 peut être intégré dans le récipient de stockage 1, comme représenté à la figure 3, ou disposé à l'extérieur, comme représenté à la figure 4. Comme sur la figure 1, un fluide contenant un antigel circule dans un circuit indépendant comportant les capteurs solaires 6 et un échangeur de chaleur 3 disposé dans le récipient de stockage 1. Comme représenté à la figure 3, l'eau sanitaire circule dans au moins un quatrième échangeur de chaleur 9, disposé dans le récipient de stockage 1, ou, comme représenté à la figure 4, dans le circuit secondaire d'un cinquième échangeur de chaleur 10, disposé à l'extérieur du récipient de chauffage et comportant un circuit primaire dans lequel circule de l'eau de chauffage en provenance du récipient de stockage 1.

Le document US-A-2002/112435 décrit par ailleurs une installation de chauffage et de refroidissement. Un échange d'énergie est assuré, au niveau d'un réservoir de stockage, entre une boucle de circulation d'air, passant par des panneaux solaires, et une boucle de circulation d'eau d'une pompe à chaleur pouvant être alimentée à partir du réservoir. L'installation peut fonctionner soit en mode chauffage soit en mode de refroidissement. Dans ce dernier cas, l'air refroidi pendant la nuit, lors de son passage dans les panneaux solaires, refroidit le fluide contenu dans le réservoir.

### Objet de l'invention

L'invention a pour but de surmonter les inconvénients des installations connues et, plus particulièrement, de gérer automatiquement les surchauffes susceptibles de se produire, notamment en période estivale.

Selon l'invention, ce but est atteint par les revendications annexées et, plus particulièrement, par le fait que l'installation comporte au moins un capteur de température disposé dans le récipient de stockage, les moyens de contrôle comportant des moyens de mise en marche du premier circulateur pendant une phase de refroidissement nocturne, si la température du fluide de stockage dans le récipient de stockage excède une limite prédéterminée à une heure prédéterminée de la nuit, de manière à refroidir le fluide de stockage contenu dans le récipient de stockage.

L'invention concerne également un procédé de contrôle d'une installation solaire combinée, dans lequel le circuit de contrôle commande, pendant une phase de refroidissement nocturne, la circulation de fluide dans les capteurs solaires, de manière à refroidir le fluide de stockage contenu dans le récipient de stockage, lorsque la température du fluide de stockage dans le récipient est supérieure à une température limite prédéterminée à une heure prédéterminée de la nuit.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 à 4 illustrent schématiquement quatre installations selon l'art antérieur.
La figure 5 illustre schématiquement un mode particulier de réalisation d'une installation selon l'invention.
La figure 6 représente un circuit de commande d'une installation selon la figure 5.
La figure 7 illustre un mode de réalisation particulier d'un organigramme permettant la gestion automatique des surchauffes d'une installation selon les figures 5 et 6.
La figure 8 représente un mode particulier de réalisation d'une étape de brassage d'un organigramme selon la figure 7.

### Description de modes particuliers de réalisation.

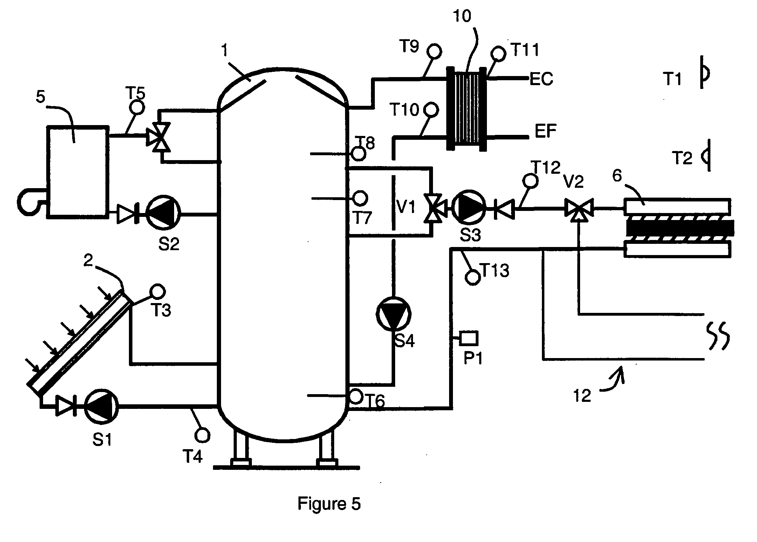

L'installation représentée à la figure 5 comporte, comme les installations connues, un récipient de stockage 1, au moins un capteur solaire 2, une chaudière constituant un chauffage auxiliaire 5, un plancher chauffant 6 et un échangeur de chaleur 10, disposé à l'extérieur du récipient de stockage. L'eau sanitaire circule dans le circuit secondaire de l'échangeur de chaleur 10, l'eau froide (EF) entrant dans l'échangeur de chaleur 10 étant chauffée pour fournir l'eau chaude sanitaire (EC). Un second circuit de chauffage, comportant un second plancher chauffant et/ou des radiateurs de chauffage, peut éventuellement être connecté au récipient de chauffage 1.

L'entrée du circuit primaire de l'échangeur de chaleur 10 est connectée à l'extrémité supérieure du récipient de stockage 1, tandis que la sortie du circuit primaire de l'échangeur 10 ramène le fluide de stockage refroidi à l'extrémité inférieure du récipient de stockage.

Le chauffage auxiliaire 5 est connecté à la partie supérieure du récipient de stockage 1, de manière à être alimenté en fluide de stockage en provenance d'une zone située juste au-dessus de la partie centrale du récipient de stockage et à fournir le fluide de stockage réchauffé à l'extrémité supérieure du récipient de stockage.

Les capteurs solaires 2 sont connectés à la partie inférieure du récipient de stockage, de manière à être alimentés en fluide de stockage en provenance d'une zone située près de l'extrémité inférieure du récipient de stockage et à fournir le fluide de stockage réchauffé à l'extrémité inférieure du récipient de stockage.

Le plancher chauffant 6 est alimenté en fluide de stockage en provenance d'une zone située juste au-dessus de la partie centrale du récipient de stockage et à renvoyer le fluide de stockage refroidi à l'extrémité inférieure du récipient de stockage.

L'installation représentée à la figure 5 est quasiment monofluide, le fluide de stockage, ou fluide caloporteur, circulant dans tous les composants de l'installation à l'exception du circuit secondaire de l'échangeur de chaleur 10, dans lequel circule l'eau sanitaire. Dans cette installation, l'énergie est stockée en partie dans le récipient de stockage 1 et, en partie, dans le plancher chauffant 6. À titre d'exemple, le récipient de stockage peut être constitué par un ballon de 400l environ, la capacité de stockage en fluide du plancher chauffant pouvant être de l'ordre de 200I. Le dimensionnement de l'installation prend en compte la capacité de stockage de la chaleur par un plancher chauffant en béton. À titre d'exemple, un plancher de 150 m² et de 10 cm d'épaisseur, correspondant à un volume de 15 m³, a une capacité de stockage d'énergie équivalente à celle de 7 m³ d'eau. Ceci permet donc de réduire le volume du récipient de stockage 1, dont la capacité doit simplement être suffisante pour permettre le chauffage de l'eau sanitaire, et, en conséquence, de réduire le volume du fluide de stockage. La capacité du récipient de stockage 1 doit néanmoins être plus importante, par exemple de l'ordre de 1000I, si l'installation comporte également des radiateurs de chauffage.

La suppression d'au moins un échangeur de chaleur par rapport aux installations connues permet d'améliorer le rendement de l'installation. Le fluide de stockage comporte de préférence un antigel. À titre d'exemple, le fluide de stockage peut être constitué par un mélange, suffisamment liquide pour circuler sans difficulté à l'intérieur de l'installation, comportant environ 57% d'eau et 43% d'antigel. En pratique, la teneur en antigel peut généralement être réduite à environ 20% pour une protection jusqu'à -7°C. Par ailleurs, l'antigel peut être totalement supprimé si l'installation est destinée à être utilisée dans une zone ne craignant pas le gel.

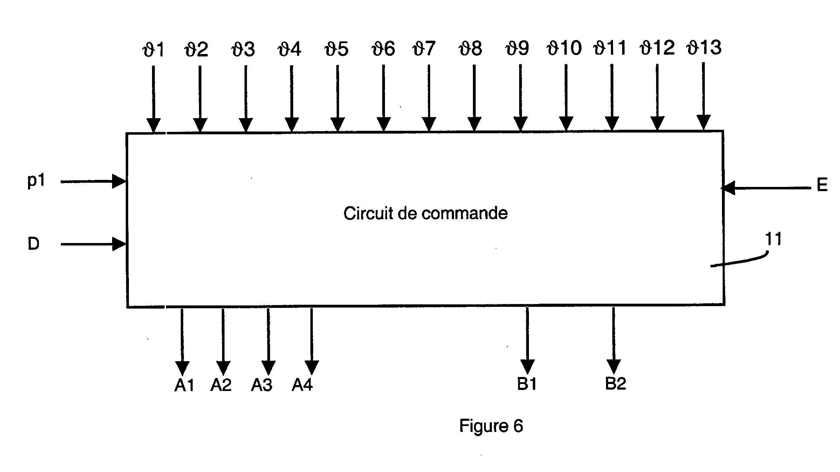

Un circuit de commande 11, de préférence à microprocesseur, représenté schématiquement à la figure 6, contrôle l'actionnement de circulateurs, par exemple constitués par des pompes, disposés en différents emplacements de l'installation, en tenant compte des températures fournies par des capteurs de température et/ou de pression disposés à des emplacements prédéterminés de l'installation.

Dans le mode de réalisation particulier représenté à la figure 5, un circulateur S1, à vitesse variable, est disposé entre le récipient de stockage 1 et les capteurs solaires 2, en amont de ceux-ci. Un circulateur S2 est disposé entre le récipient de stockage 1 et le chauffage auxiliaire 5, en amont de celui-ci. Un circulateur S3 est disposé entre le récipient de stockage 1 et le plancher chauffant 6, en amont de celui-ci, de préférence en aval d'une vanne de distribution V1 connectée à deux sorties distinctes du récipient de stockage, disposées respectivement dans la partie centrale du récipient et dans une zone médiane de la partie supérieure du récipient. Un circulateur S4 est disposé dans le circuit primaire de l'échangeur de chaleur 10, à la sortie de celui-ci. Des capteurs de température T1 et T2 sont destinés à fournir des mesures représentatives de la température ambiante, respectivement à l'extérieur et à l'intérieur de l'appartement ou de la maison à chauffer. Des capteurs de température T3 et T4 sont respectivement disposés à la sortie des capteurs solaires 2 et à la sortie du récipient de stockage 1, en amont du circulateur S1. Un capteur de température T5 est disposé à la sortie du chauffage auxiliaire 5. Des capteurs de température T6, T7 et T8, destinés à mesurer la température dans diverses zones du récipient de stockage 2, sont respectivement disposés
- dans la partie inférieure du récipient de stockage, à proximité des entrées des circuits en provenance de l'échangeur de chaleur 10 et du plancher chauffant 6 (capteur T6),
- entre les deux sorties du récipient connectées à la vanne de distribution V1 (capteur T7),
- dans la partie supérieure du récipient, au-dessus des sorties connectées à la vanne de distribution V1 (capteur T8).
Des capteurs de température T9 et T10 sont respectivement disposés en amont et en aval de l'échangeur de chaleur 10, dans le circuit primaire de celui-ci. Un capteur de température T11 est disposé à la sortie d'eau chaude de l'échangeur de chaleur 10. Des capteurs de température T12 et T13 mesurent respectivement la température en amont et en aval du plancher chauffant 6. Un capteur de pression P1 est disposé en aval du plancher chauffant 6. Chaque circulateur est, de préférence, muni d'un clapet anti-retour pour éviter des phénomènes de thermosiphon.

L'installation comporte également une boucle de décharge 12 connectée en parallèle sur le plancher chauffant 6, par l'intermédiaire d'une vanne de zone V2 disposée en amont du plancher chauffant 6, en aval du circulateur S3. La boucle de décharge 12 est, de préférence, constituée par un ou deux circuits, en polyéthylène réticulé ou en matériau équivalent, disposés dans le sol à l'extérieur ou à l'intérieur de la maison à chauffer.

Le circuit de commande 11 est connecté aux capteurs de température T1 à T13 et de pression P1, de manière à recevoir des signaux représentatifs des températures ϑ1 à ϑ 13, respectivement mesurées par les capteurs de température T1 à T13, ainsi que des signaux représentatifs de la pression p1 mesurée par le capteur de pression P1 et des signaux de débit D fournis par un détecteur de débit proportionnel (non représenté), disposé dans l'entrée d'eau froide (EF) en amont du circuit secondaire de l'échangeur de chaleur 10. Le circuit de commande fournit des signaux A1 à A4 de commande des circulateurs S1 à S4 et des signaux B1 et B2 de commande des vannes V1 et V2. Il comporte également des moyens de programmation, schématisés à la figure 6 par une entrée E de programmation permettant, par exemple, de programmer à distance différentes valeurs de seuil, de limite et de consigne et de régler la date et l'heure.

L'installation représentée à la figure 5 fonctionne, de préférence, de la manière décrite ci-dessous.

La vitesse du circulateur S1 est contrôlée automatiquement par les signaux de commande A1 fournis par le circuit de commande 11, de manière à maintenir un écart sensiblement constant (par exemple 2°C) entre les températures ϑ3 et ϑ4, respectivement mesurées par les capteurs de température T3 et T4. Ainsi, lorsque les capteurs solaires fournissent peu d'énergie, par exemple en début de matinée ou en fin de journée, la vitesse du circulateur S1 est réduite et la quantité d'énergie transférée au récipient de stockage est adaptée en conséquence.

Par ailleurs, dans un mode de réalisation préférentiel, le circulateur S1 est arrêté dès que la température ϑ8 mesurée par le capteur de température T8 dépasse une valeur de consigne T8cons prédéterminée, typiquement comprise entre 70°C et 80°C, jusqu'à ce que la température ϑ3 atteigne une valeur limite T3lim, typiquement comprise entre 130°C et 140°C, et/ou que la pression p1 mesurée par le capteur de pression P1 atteigne une valeur limite P1lim, typiquement de l'ordre de 3 bars. Dès qu'une des valeurs limites T3lim ou P1lim est atteinte, le circulateur S1 est remis en service, à une vitesse réduite, de l'ordre de 10% de sa vitesse nominale, jusqu'à ce que les valeurs mesurées redescendent respectivement au-dessous de T3lim-ΔT3lim ou de P1lim-ΔP1lim. Il est ainsi possible de limiter les températures excessives dans le récipient de stockage 1, en limitant, par le contrôle du débit du circulateur S1, la quantité d'énergie injectée dans le récipient de stockage par les capteurs solaires 2. Simultanément, la limitation de la vitesse du circulateur S1 lorsque la température ϑ8 du fluide de stockage dépasse la valeur de consigne T8cons permet de faire fonctionner les capteurs solaires 2 à une température élevée, proche de T3lim, ce qui réduit leur rendement et limite automatiquement la quantité d'énergie injectée dans ie récipient de stockage 1 par les capteurs solaires. Dans une variante de réalisation, le circulateur S1 est redémarré, pour un cycle de marche de durée prédéterminée, lorsque la température limite T3lim est atteinte. Il est ainsi alternativement soumis à un cycle de marche de durée prédéterminée, à vitesse nominale, lorsque la limite T3lim est atteinte, puis à un cycle d'arrêt jusqu'à ce que cette limite soit de nouveau atteinte.

En complément, plus particulièrement en période estivale, les capteurs solaires 2 sont utilisés comme dissipateurs de chaleur pendant une phase de refroidissement nocturne. Ceci permet de gérer les surchauffes. Dans un mode de réalisation préférentiel, le circulateur S1 est mis en marche par le circuit de commande 11 si, à une heure prédéterminée de la nuit, par exemple à 23h, la température ϑ8 du fluide de stockage excède une valeur prédéterminée, qui peut être la valeur de consigne T8cons (70°C à 80°C). Le circulateur S1 est ensuite arrêté lorsque la température ϑ8 du fluide de stockage est redescendue au-dessous d'un seuil prédéterminé, qui peut être la valeur de consigne T8cons ou une valeur inférieure à celle-ci, par exemple 60°C.

Les capteurs solaires 2 étant connectés à la partie inférieure du récipient de stockage 1, ils refroidissent essentiellement le fond du récipient de stockage pendant la phase de refroidissement nocturne. Pour obtenir un refroidissement plus homogène du fluide de stockage, le circuit de commande provoque un brassage du fluide de stockage à travers un circuit de circulation de fluide de stockage communiquant respectivement avec les parties supérieure et inférieure du récipient de stockage. Dans le mode de réalisation illustré à la figure 5, on utilise le circuit de circulation de fluide constituant le circuit primaire de l'échangeur de chaleur 10. Le circuit de commande 11 contrôle alors périodiquement, pendant la phase de refroidissement nocturne, la mise en marche du circulateur S4.

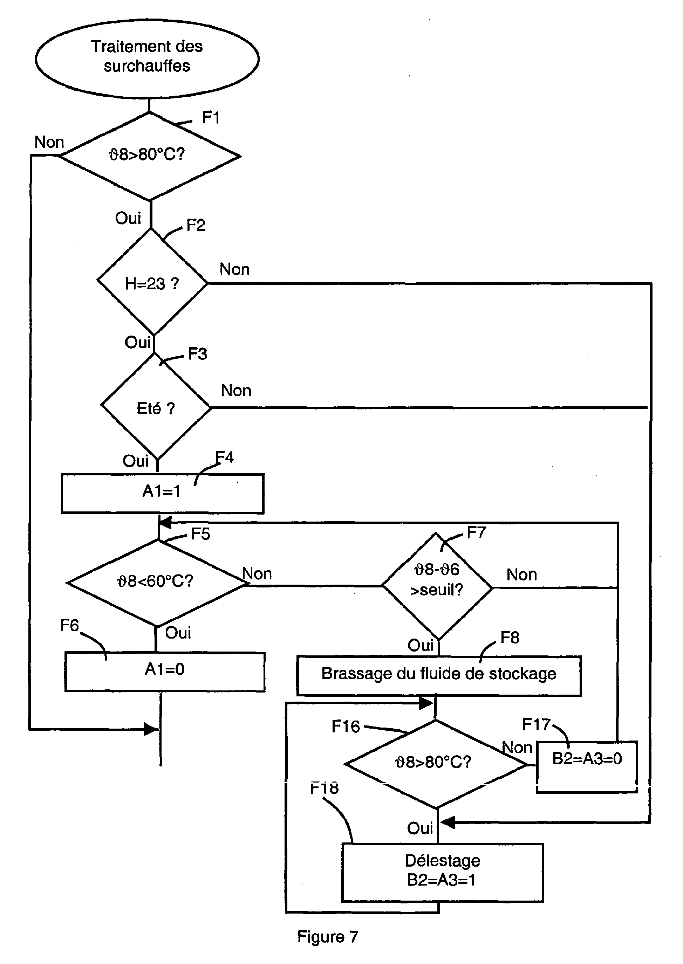

La figure 7 illustre un exemple de réalisation d'un organigramme pouvant être utilisé par le microprocesseur du circuit de commande 11 pour gérer automatiquement les surchauffes. Dans une étape F1, le microprocesseur compare la température ϑ8 à une limite de 80°C. Si la température ϑ8 est inférieure ou égale à 80°C (sortie non de F1), il considère qu'il n'y a pas de surchauffe et termine le cycle de traitement des surchauffes. Par contre, si la température ϑ8 est supérieure à 80°C (sorite Oui de F1), le microprocesseur passe à une étape F2, pendant laquelle il vérifie s'il est 23 heures (H=23?). S'il est 23 heures (sortie Oui de F2), il vérifie si c'est la période estivale (été?). Si c'est le cas (sortie Oui de F3), il passe à la phase de refroidissement nocturne, en mettant en marche le circulateur S1 dans une étape F4, (A1=1). Puis il vérifie, dans une étape F5, si la température ϑ8 est redescendue au-dessous de 60°C. Si c'est le cas (sortie Oui de F5), le microprocesseur arrête le circulateur S1 dans une étape F6 (A1=0) et termine le cycle de traitement des surchauffes. Par contre, si la température reste supérieure ou égale à 60°C (sortie Non de F5), le microprocesseur peut comparer, dans une étape F7 les températures ϑ8 et ϑ6. Si la différence ϑ8-ϑ6 est supérieure à un seuil prédéterminé (sortie Oui de F7), il passe alors à une étape F8 de brassage du fluide de stockage. Par contre, si la différence entre les températures ϑ8 et ϑ6 est faible (sortie Non de F7), il se reboucle à l'entrée de l'étape F5.

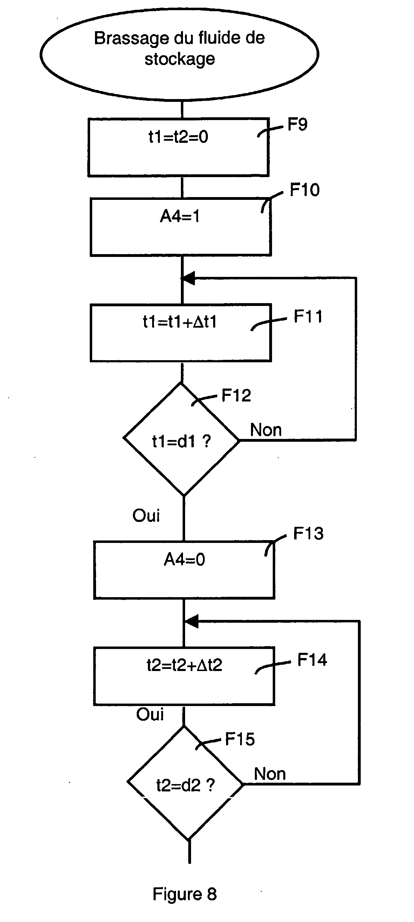

Un mode de réalisation particulier de l'étape de brassage, dans lequel le brassage est effectué par une mise en marche périodique du circulateur S4, est illustré à la figure 8. Dans une étape F9, le microprocesseur met à zéro 2 grandeurs t1 et t2 (t1=t2=0). Puis, il met en marche le circulateur S4 (A4=1) dans une étape F10 et incrémente la grandeur t1 (t1=t1+Δt1) dans une étape F11. Il vérifie ensuite, dans une étape F12, si t1 a atteint une valeur d1 prédéterminée, représentative de la durée de brassage désirée. Si ce n'est pas le cas (sortie Non de F12), il se reboucle à l'entrée de l'étape F11. Par contre, lorsque t1 est égal à d1 (sortie Oui de F12), le microprocesseur arrête le circulateur S4 (A4=0) dans une étape F13, interrompant ainsi automatiquement le brassage après la durée d1. Le microprocesseur incrémente alors (étape F14) la grandeur t2 (t2=t2+Δt2). Il vérifie ensuite, dans une étape F15, si t2 a atteint une valeur d2 prédéterminée, représentative d'une durée d'interruption du brassage. Si ce n'est pas le cas (sortie Non de F15), il se reboucle à l'entrée de l'étape F14. Par contre, lorsque t2 est égal à d2 (sortie Oui de F15), le microprocesseur vérifie de nouveau, dans une étape F16 (figure 7), si la température ϑ8 est toujours supérieure à 80°C. Si ce n'est pas le cas (sortie Non de F16), cela signifie que le fluide de stockage a commencé à se refroidir et le microprocesseur se reboucle, éventuellement après une étape F17, à l'entrée de F5, répétant ainsi les opérations de brassage jusqu'à ce que la température ϑ8 soit redescendue au-dessous de 60°C. Par contre, si après une étape F8 de brassage, la température ϑ8 n'est pas redescendue au-dessous de 80°C (sortie Oui de F16), le microprocesseur effectue un délestage, ouvrant (étape F18) la boucle de décharge 12 en ouvrant la vanne de zone V2 (B2=1) et en mettant en marche le circulateur S3 (A3=1), de manière à orienter le fluide de stockage en direction de la boucle de décharge et non du plancher chauffant 6, avant de se reboucler à l'entrée de l'étape F16. Le fonctionnement de la boucle de stockage est ensuite interrompu, dans l'étape F17 (B2=A3=0), lorsque la température ϑ8 est redescendue au-dessous de 80°C (sortie Non de F16).

Dans un mode de réalisation préférentiel, la boucle de décharge 12 est utilisée dans la journée, dès que la température ϑ8 dépasse 80°C.

Le fonctionnement du chauffage auxiliaire 5 et du circulateur S2 est, de manière classique, contrôlé par le circuit de commande i i en fonction de la température du fluide de stockage dans la partie supérieure, la plus chaude, du récipient de stockage 1, plus particulièrement en fonction des températures ϑ7 et ϑ8 mesurées respectivement par les capteurs de température T7 et T8, de manière à maintenir le fluide de stockage au moins à une température de consigne prédéterminée dans cette partie, de l'ordre de 50°C par exemple pour T8. Le circulateur S2 est arrêté dès que la température ϑ8 du fluide de stockage atteint 50°C.

Le circulateur S3, à vitesse variable, permet de contrôler le débit du fluide de stockage envoyé dans le plancher chauffant 6, notamment en fonction des températures ϑ1, ϑ2, ϑ12 et ϑ13, mesurées respectivement par les capteurs de température T1, T2, T12 et T13, de manière à réguler la température ϑ12 fournie par le capteur T12, à l'entrée du plancher chauffant. Lorsque la température extérieure est basse, toute l'énergie des capteurs solaires est, de préférence, transmise par le circulateur S3 dans le plancher chauffant 6. Par contre, lorsque la température extérieure est élevée, la température ϑ8 du fluide de stockage peut être trop élevée et, s'il existe une différence entre les températures ϑ12 et ϑ13 mesurées par les capteurs T12 et T13, le débit du circulateur S3 peut alors être contrôlé en fonction de la température ϑ13 mesurée par le capteur de température T13, à la sortie du plancher chauffant 6.

En dehors des étapes de brassage réalisées pendant les phases de refroidissement nocturne, le fonctionnement du circulateur S4 est, de manière classique, contrôlé en fonction des signaux de débit D fournis par le détecteur de débit proportionnel (non représenté), disposé dans l'entrée d'eau froide (EF) en amont du circuit secondaire de l'échangeur de chaleur 10, et de la température ϑ9 mesurée par le capteur de température T9. La vitesse de rotation du circulateur S4 et, en conséquence, ie débit du fluide de stockage dans le circuit primaire de l'échangeur de chaleur 10, entre les extrémités supérieure, chaude, et inférieure, plus froide, du récipient 1 peuvent être corrigés en fonction de la température ϑ11 de l'eau chaude sanitaire (EC) mesurée par le capteur de température T11.

L'invention n'est pas limitée aux modes de réalisation particuliers décrits ci-dessus. En particulier, la gestion des surchauffes pendant une phase de refroidissement nocturne peut être utilisée non seulement dans une installation selon la figure 5, dans laquelle le fluide de stockage circule dans les capteurs solaires 2, mais également dans toute installation dans laquelle les capteurs solaires 2 sont connectés à un échangeur de chaleur 3 disposé à l'intérieur du récipient de stockage 1, comme dans les installations représentées aux figures 1 à 4.

Par ailleurs les différents seuils utilisés par le circuit de commande 11 peuvent être programmés par tout moyen approprié, l'heure de vérification des surchauffes peut être modifiée et la durée de la période estivale adaptée au climat. Le délestage dans la boucle de décharge peut être effectué pendant une durée prédéterminée ou être interrompu lorsque la température ϑ8 est redescendue au-dessous d'un seuil différent du seuil de mise en route du délestage.

## Revendications

1. Installation solaire combinée, comportant au moins un capteur solaire (2), un récipient (1) de stockage d'un fluide de stockage d'énergie, un circuit de circulation d'un fluide dans les capteurs solaires (2), muni d'un premier circulateur (S1) et destiné à permettre le chauffage du fluide de stockage par les capteurs solaires, et des moyens (11) de contrôle de la circulation de fluide dans les capteurs solaires, installation **caractérisée en ce qu'**elle comporte au moins un capteur de température (T8) disposé dans le récipient de stockage (1), les moyens de contrôle (11) comportant des moyens (F4) de mise en marche du premier circulateur (S1) pendant une phase de refroidissement nocturne si la température (ϑ8) du fluide de stockage dans le récipient de stockage excède une limite prédéterminée à une heure prédéterminée de la nuit, de manière à refroidir le fluide de stockage contenu dans le récipient de stockage.

2. Installation selon la revendication 1, **caractérisée en ce que** les moyens de contrôle (11) comportent des moyens (F6) pour arrêter le premier circulateur lorsque la température du fluide de stockage dans le récipient de stockage est redescendue au-dessous d'un seuil prédéterminé, inférieur à ladite limite.

3. Installation selon l'une des revendications 1 et 2, **caractérisé en ce qu'**elle comporte deux capteurs de température (T8, T6), disposés respectivement dans les parties supérieure et inférieure du récipient de stockage (1).

4. Installation selon l'une quelconque des revendications 1 à 3, **caractérisé en ce que** les capteurs solaires (2) sont connectés à la partie inférieure du récipient de stockage (1).

5. Installation selon l'une quelconque des revendications 1 à 4, **caractérisée en ce que** les capteurs solaires (2) communiquent avec le récipient (1) de stockage, de manière à ce que le fluide de stockage puisse circuler dans les capteurs solaires.

6. Installation selon l'une quelconque des revendications 1 à 4, **caractérisée en ce que** les capteurs solaires (2) sont connectés, par le circuit de circulation, avec un échangeur de chaleur (3) disposé à l'intérieur du récipient de stockage (1).

7. Installation selon l'une quelconque des revendications 1 à 6, **caractérisée en ce qu'**elle comporte un circuit de circulation du fluide de stockage, muni d'un second circulateur (S4) et communiquant respectivement avec les parties supérieure et inférieure du récipient de stockage (1), le circuit de contrôle (11) comportant des moyens (F8) pour mettre périodiquement en marche le second circulateur (S4) lorsque le premier circulateur (S1) est en marche, de manière à faire circuler le fluide de stockage de la partie supérieure du récipient vers la partie inférieure du récipient.

8. Installation selon l'une quelconque des revendications 1 à 7, **caractérisée en ce qu'**elle comporte une boucle de décharge (12), connectée au récipient de stockage (1) par l'intermédiaire d'une vanne (V2) et d'un troisième circulateur (S3), le circuit de contrôle (11) comportant des moyens (F18) pour ouvrir la vanne (V2) et mettre en marche le troisième circulateur (S3) si la température du fluide de stockage dans le récipient de stockage excède la limite prédéterminée.

9. Installation selon l'une quelconque des revendications 1 à 8, **caractérisée en ce que** les moyens de contrôle (11) comportent des moyens pour arrêter le premier circulateur (S1) lorsque la température (ϑ8) mesurée par un capteur de température (T8) disposé dans le récipient de stockage dépasse une valeur de consigne (T8cons) prédéterminée et pour remettre en marche le premier circulateur (S1) lorsque la température mesurée par un capteur de température (T3) disposé à la sortie des capteurs solaires atteint une limite prédéterminée (T3lim) et/ou lorsque la pression (p1) mesurée par un capteur de pression (P1), disposé en aval du plancher chauffant (6), atteint une limite correspondante prédéterminée (P1lim).

10. Procédé de contrôle d'une installation selon l'une quelconque des revendications 1 à 9, **caractérisé en ce que** le circuit de contrôle (11) commande, pendant une phase de refroidissement nocturne, la circulation de fluide dans les capteurs solaires (2), de manière à refroidir le fluide de stockage contenu dans le récipient de stockage (1), lorsque la température du fluide de stockage dans le récipient est supérieure ou égale à une température limite prédéterminée à une heure prédéterminée de la nuit.

## Claims

1. Mixed solar installation, comprising at least one solar collector (2), a storage recipient (1) for storing an energy storage fluid, a circulation circuit for circulation of a fluid in the solar collectors (2), equipped with a first circulator (S1) and designed to enable the storage fluid to be heated by the solar collectors, and control means (11) for controlling circulation of the fluid in the solar collectors, installation **characterized in that** it comprises at least one temperature sensor (T8) located in the storage recipient (1), the control means (11) comprising means (F4) for starting the first circulator (S1) during a night cooling phase if the temperature (ϑ8) of the storage fluid in the storage recipient exceeds a preset limit at a preset time of night so as to cool the storage fluid contained in the storage recipient.

2. Installation according to claim 1, **characterized in that** the control means (11) comprise means (F6) for stopping the first circulator when the temperature of the storage fluid in the storage recipient has dropped back below a preset threshold, lower than said limit.

3. Installation according to one of claims 1 and 2, **characterized in that** it comprises two temperature sensors (T8, T6) respectively located in the top and bottom parts of the storage recipient (1).

4. Installation according to any one of claims 1 to 3, **characterized in that** the solar collectors (2) are connected to the bottom part of the storage recipient (1).

5. Installation according to any one of claims 1 to 4, **characterized in that** the solar collectors (2) communicate with the storage recipient (1) so that the storage fluid can circulate in the solar collectors.

6. Installation according to any one of claims 1 to 4, **characterized in that** the solar collectors (2) are connected, by the circulation circuit, with a heat exchanger (3) located inside the storage recipient (1).

7. Installation according to any one of claims 1 to 6, **characterized in that** it comprises a circulation circuit for circulation of the storage fluid, equipped with a second circulator (S4) and respectively communicating with the top and bottom parts of the storage recipient (1), the control circuit (11) comprising means (F8) for periodically starting the second circulator (S4) when the first circulator (S1) is running, so as to make the storage fluid circulate from the top part of the recipient to the bottom part of the recipient.

8. Installation according to any one of claims 1 to 7, **characterized in that** it comprises a discharge loop (12), connected to the storage recipient (1) by means of a valve (V2) and of a third circulator (S3), the control circuit (11) comprising means (F18) for opening the valve (V2) and for starting the third circulator (S3) if the temperature of the storage fluid in the storage recipient exceeds the preset limit.

9. Installation according to any one of claims 1 to 8, **characterized in that** the control means (11) comprise means for stopping the first circulator (S1) when the temperature (ϑ8) measured by a temperature sensor (T8) located in the storage recipient exceeds a preset setpoint value (T8cons) and to restart the first circulator (S1) when the temperature measured by a temperature sensor (T3) located at the outlet of the solar collectors reaches a preset limit (T3lim) and/or when the pressure (p1) measured by a pressure sensor (P1), located downstream from the heating floor (6), reaches a preset corresponding limit (P1lim).

10. Method for controlling an installation according to any one of claims 1 to 9, **characterized in that**, during a night cooling phase, the control circuit (11) controls the fluid circulation in the solar collectors (2) so as to cool the storage fluid contained in the storage recipient (1) when the temperature of the storage fluid in the recipient is greater than or equal to a preset limit temperature at a preset time of night.

## Patentansprüche

1. Kombinierte Solaranlage, die mindestens einen Sonnenkollektor (2), einen Speicherbehälter (1) zum Speichern eines Energiespeicherfluids, eine Leitung für die Zirkulation eines Fluids in den Sonnenkollektoren (2), die mit einer ersten Umlaufpumpe (S1) ausgestattet und dazu bestimmt ist, die Erwärmung des Speicherfluids mittels der Sonnenkollektoren zu ermöglichen, sowie Steuerungsmittel (11) zur Steuerung der Zirkulation des Fluids in den Sonnenkollektoren umfasst, Anlage, die **dadurch gekennzeichnet ist, dass** sie mindestens einen Temperaturmessfühler (T8) umfasst, der in dem Speicherbehälter (1) angeordnet ist, wobei die Steuerungsmittel (11) Mittel (F4) zum Ingangsetzen der ersten Umlaufpumpe (S1) während einer nächtlichen Abkühlungsphase für den Fall umfasst, dass die Temperatur (ϑ8) des Speicherfluids in dem Speicherbehälter zu einer bestimmten nächtlichen Stunde einen vorbestimmten Grenzwert überschreitet, und so das in dem Speicherbehälter enthaltene Speicherfluid kühlt.

2. Anlage nach Anspruch 1, **dadurch gekennzeichnet, dass** die Steuerungsmittel (11) Mittel (F6) zum Anhalten der ersten Umlaufpumpe für den Fall umfasst, dass die Temperatur des Speicherfluids in dem Speicherbehälter wieder unter einen vorbestimmten Schwellenwert gefallen ist, der unter dem genannten Grenzwert liegt.

3. Anlage nach einem der Ansprüche 1 und 2, **dadurch gekennzeichnet, dass** sie zwei Temperaturmessfühler (T8, T6) umfasst, die jeweils im oberen und unteren Teil des Speicherbehälters (1) angeordnet sind.

4. Anlage nach einem der Ansprüche 1 bis 3, **dadurch gekennzeichnet, dass** die Sonnenkollektoren (2) an den unteren Teil des Speicherbehälters (1) angeschlossen sind.

5. Anlage nach einem der Ansprüche 1 bis 4, **dadurch gekennzeichnet, dass** die Sonnenkollektoren (2) mit dem Speicherbehälter (1) in der Weise verbunden sind, dass das Speicherfluid in den Sonnenkollektoren zirkulieren kann.

6. Anlage nach einem der Ansprüche 1 bis 4, **dadurch gekennzeichnet, dass** die Sonnenkollektoren (2) über die Zirkulationsleitung mit einem Wärmetauscher (3) verbunden sind, der innerhalb des Speicherbehälters (1) angeordnet ist.

7. Anlage nach einem der Ansprüche 1 bis 6, **dadurch gekennzeichnet, dass** sie eine Leitung für die Zirkulation des Speicherfluids umfasst, die mit einer zweiten Umlaufpumpe (S4) ausgestattet ist und jeweils Verbindung hat zum oberen und unteren Teil des Speicherbehälters (1), wobei die Steuerschaltung (11) Mittel (F8) umfasst, mittels derer die zweite Umlaufpumpe (S4) in regelmäßigen Abständen in Gang gesetzt wird, wenn die erste Umlaufpumpe (S1) in Betrieb ist, um das Speicherfluid vom oberen Teil des Behälters zum unteren Teil des Behälters zu leiten.

8. Anlage nach einem der Ansprüche 1 bis 7, **dadurch gekennzeichnet, dass** sie einen Entlastungskreislauf (12) umfasst, der mit dem Speicherbehälter (1) mittels eines Ventils (V2) und einer dritten Umlaufpumpe (S3) verbunden ist, wobei die Steuerschaltung (11) Mittel (F18) zum Öffnen des Ventils (V2) und Ingangsetzen der dritten Umlaufpumpe (S3) für den Fall umfasst, dass die Temperatur des Speicherfluids in dem Speicherbehälter den vorbestimmten Grenzwert überschreitet.

9. Anlage nach einem der Ansprüche 1 bis 8, **dadurch gekennzeichnet, dass** die Steuerungsmittel (11) Mittel zum Anhalten der ersten Umlaufpumpe (S1) für den Fall umfassen, dass die Temperatur (ϑ8), die von einem Temperaturmessfühler (T8) gemessen wurde, der in dem Speicherbehälter angeordnet ist, einen vorbestimmten Sollwert (T8cons) überschreitet, und zum Wiederingangsetzen der ersten Umlaufpumpe (S1) in dem Fall, dass die von einem am Ausgang der Sonnenkollektoren angeordneten Temperaturmessfühler (T3) gemessene Temperatur einen vorbestimmten Grenzwert (T3lim) erreicht und/oder wenn der Druck (p1), der von einem Druckmessfühler (P1) gemessen wurde, der der Fußbodenheizung (6) nachgeschaltet angeordnet ist, einen vorbestimmten entsprechenden Grenzwert (P1lim) erreicht.

10. Verfahren zur Steuerung einer Anlage nach einem der Ansprüche 1 bis 9, **dadurch gekennzeichnet, dass** die Steuerschaltung (11) während einer nächtlichen Abkühlungsphase die Fluidzirkulation in den Sonnenkollektoren (2) steuert, um so das in dem Speicherbehälter (1) enthaltene Speicherfluid abzukühlen, wenn die Temperatur des Speicherfluids in dem Behälter zu einer bestimmten nächtlichen Stunde eine vorbestimmte Grenztemperatur überschreitet.
